# EUROPÄISCHE PATENTSCHRIFT

(11) **EP 1 771 487 B1**
(45) Veröffentlichungstag und Bekanntmachung des Hinweises auf die Patenterteilung: **28.09.2011**
(21) Anmeldenummer: 05766076.3
(22) Anmeldetag: 04.06.2005
(51) Int. Cl.: C08F 220/52, C09J 163/02, C09J 163/00

(54) **ADDITIVE FÜR EPOXID-HARZE**
EPOXY RESIN ADDITIVE
ADDITIF POUR RESINE EPOXYDE

(30) Priorität: 30.07.2004 DE 102004037472
(43) Veröffentlichungstag der Anmeldung: 11.04.2007
(73) Patentinhaber: Evonik Röhm GmbH, 64293 Darmstadt (DE)
(72) Erfinder: SCHATTKA, Jan, Hendrik, 63454 Hanau (DE); LÖHDEN, Gerd, 63457 Hanau (DE); BELZNER, Winfried, 63584 Gründau (DE); GEYER, Hans-Jürgen, 64367 Mühltal (DE); JUNG, Herbert, 63751 Karlstein (DE); MATTHESS, Florian, 63776 Mömbris (DE); RAUSCH, Ursula, 64347 Griesheim (DE); ZMARZLY, Rebecca, 63512 Hainburg (DE)
(86) Internationale Anmeldenummer: PCT/EP2005/006014
(87) Internationale Veröffentlichungsnummer: WO 2006/012941

(56) Entgegenhaltungen:
- EP-A- 1 300 291
- WO-A-03/054069
- US-A- 4 199 486
- US-A1- 2004 059 023

## Beschreibung

### Gebiet der Erfindung

Die Erfindung betrifft Additive für Epoxid-Harze.

### Technisches Gebiet

Epoxidharze (EP, nach DIN 7728) sind bekannt. Man versteht darunter oligomere Verbindungen mit mehr als einer Epoxidgruppe pro Mol, die zur Herstellung von Duroplasten verwendet werden und auch die Duroplaste selbst.

Die Umwandlung der Oligomeren in Duroplaste erfolgt durch Polyadditionsreaktionen mit Härtern. Die Reaktion kann bei Raumtemperatur stattfinden oder bei erhöhter Temperatur durchgeführt werden.

Die EP werden unter anderem als Lackkomponenten und als Beschichtungen sowie als Klebstoffe eingesetzt.

Eine typische Rezeptur für ein Epoxidharz enthält folgende Komponenten:
- Harz
- Härter
- Beschleuniger
- Füllstoffe (optional)
- Pigmente (optional)
- Treibmittel (optional)

### Stand der Technik

WO 03/054069 (Henkel Teroson GmbH) beschreibt wärmehärtbare, schäumende Zusammensetzungen aus einem flüssigen Epoxid-Harz, einem fein verteilten thermoplastischen Pulver, aus einem Treibmittel, einem Härter und Füllstoffen. Das thermoplastische Pulver kann, neben anderen Polymeren, auch aus Poly(meth)acrylat (PMMA) bestehen und hat eine Teilchengröße von vorzugsweise weniger als 100 µm.
Der entstehende Schaum kann als Versteifungselement im Fahrzeugbau verwendet werden.

EP 1 300 291 (CWW-Gerko) beschreibt einen Antidröhnkörper auf Epoxidharzbasis, dem vor der Verarbeitung ein Geliermittel zugesetzt wird. Dadurch geliert die Antidröhnmasse bereits bei ca. 120° C innerhalb von 10-12 Minuten, so dass die mechanische Stabilität für die weiteren Verarbeitungsschritte ausreicht.
Als Geliermittel werden der Antidröhnmasse 1-10 Gew.-% Methylmethacrylat zugesetzt. Das Geliermittel besteht aus einer nicht näher spezifizierten Mischung aus Methylmethacrylat und n-Butylmethacrylat.

### Aufgabe

Es bestand die Aufgabe, ein Additiv für Epoxidharze zu entwickeln, das nicht nur in Antidröhnmassen eingesetzt werden kann, die bei einer ganz bestimmten Temperatur und über eine festgelegte Zeit vorgeliert werden, sondern es sollen darüber hinaus Additive für Epoxidharze zur Verfügung gestellt werden, die - in Abhängigkeit von ihrer Zusammensetzung - variable Gelierpunkte einstellen lassen. Die variablen Gelierpunkte haben im Gegensatz zur festen Geliertemperatur, die in der EP 1 300 291 beschrieben wird, den Vorteil, dass die Temperatur der Vorgelierung passend zu den örtlichen und zeitlichen Verhältnissen gewählt werden kann.

### Lösung

Gelöst wird diese Aufgabe durch ein Additiv als Vorgelierhilfsmittel mit folgender Zusammensetzung:
- ein Additiv zusammengesetzt aus einem Kern und einer optionalen Schale, wobei die Massenverhältnisse zwischen Kern und Schale zwischen 100 Gew.% : 0 Gew.% und 20 Gew.% : 80 Gew.% liegen können und wobei der Kern folgende Monomerzusammensetzung aufweist:
   K_{A}: 99,8-49,8 Gew.-% an C₁-C₈-(Meth)acrylaten
   K_{B}: 0,2 - 20 Gew.-% eines radikalisch polymerisierbaren Monomeren mit basischem Stickstoffatom und
   K_{C}: 0-50 Gew.-%, jeweils bezogen auf die Zusammensetzung des Kerns, an weiteren, mit K_{A} und K_{B} copolymerisierbaren Monomeren aufweist
und wobei die Schale folgende Monomerzusammensetzung aufweist:
S_{A}: 100-65 Gew.-%, Bedeutung der Monomeren wie unter K_{A} aufgeführt,
S_{B}: 0-20 Gew.-% eines einfachen oder N-substituierten Amides der Acrylsäure und/oder der Methacrylsäure, oder eines aminsubstituierten Alkylesters der Acrylsäure und/oder der Methacrylsäure und
S_{C}: 0-50 Gew.-%, jeweils bezogen auf die Zusammensetzung der Schale, an mit S_{A} und S_{B} copolymerisierbaren Monomeren.

Das Additiv kann in einem Sonderfall auch aus reinem Kernpolymer aufgebaut sein. Bevorzugt sind jedoch Massenverhältnisse zwischen Kern und Schale von 80 Gew.% : 20 Gew.% bis 20 Gew.% : 80 Gew.%. Besonders bevorzugt sind Massenverhältnisse zwischen Kern und Schale von 60 Gew.% : 40 Gew.% bis 40 Gew.% : 60 Gew.%.

Als Monomerkomponenten für K_{A} kommen Methyl(meth)acrylat, Ethyl(meth)acrylat, Propyl(meth)acrylat, Isopropyl(meth)acrylat, n-Butyl(meth)acrylat, Isobutyl(meth)acrylat, tert.-Butyl(meth)acrylat, 2-Ethylhexyl(meth)acrylat, Hexyl(meth)acrylat, Cyclohexyl(meth)acrylat, Pentyl(meth)acrylat, Heptyl(meth)acrylat und Octyl(meth)acrylat in Frage. Die Monomerkomponente K_{A} wird in Mengen von 99,8-49,8 Gew.% eingesetzt. Bevorzugt werden Mengen von 90,0-53,0 Gew.% eingesetzt. Besonders bevorzugt sind Mengen von 75,0-55,0 Gew.%.

Die Schreibweise (Meth)acrylat bedeutet hier sowohl Methacrylat, wie z.B. Methylmethacrylat, Ethylmethacrylat usw., als auch Acrylat, wie z.B. Methylacrylat, Ethylacrylat usw.

Unter einem radikalisch polymerisierbaren Monomeren mit basischem Stickstoffatom K_{B} versteht man beispielsweise N-Vinyl-methyl-2-imidazol, N-Vinyl-ethyl-2-imidazol, N-Vinyl-phenyl-2-imidazol, N-Vinyl-dimethyl-2,4-imidazol, N-Vinyl-benzimidazol, N-Vinylimidazolin (auch Vinyl-1-imidazolin genannt), N-Vinyl-methyl-2-imidazolin, N-Vinyl-phenyl-2-imidazolin und Vinyl-2-imidazol, besonders bevorzugt N-Vinylimidazol (auch Vinyl-1-imidazol genannt), verwendet werden.

Außerdem geeignet sind N-Vinylpyrrolidon, N-Vinylmethyl-5-pyrrolidon, N-Vinylmethyl-3-pyrrolidon, N-Vinylethyl-5-pyrrolidon, N-Vinyldimethyl-5-5-pyrrolidon, N-Vinylphenyl-5-pyrrolidon, N-Allylpyrrolidon, N-Vinylthiopyrrolidon, N-Vinylpiperidon, N-Vinyldiäthyl-6,6-piperidon, N-Vinylcaprolactam, N-Vinylmethyl-7-caprolactam, N-Vinyläthyl-7-caprolactam, N-Vinyldimethyl-7,7-caprolactam, N-Allyl-caprolactam, N-Vinylcapryllactam.

Weitere geeignete Monomere sind N-Vinylcarbazol, N-Allylcarbazol, N-Butenylcarbazol, N-Hexenylcarbazol und N-(Methyl-1-ethylen)carbazol.

Als einfach oder N-substituierte Amide der Acrylsäure und/oder der Methacrylsäure oder eines aminsubstituierten Alkylesters der Acrylsäure und/oder der Methacrylsäure (b) können beispielsweise N-Methyl(meth)acrylamid, N-Dimethylaminoethyl-(meth)acrylamid, N-Dimethylamirtopropyl(meth)acrylamid, N-Isopropyl(meth)acrylamid, N-tert.Butyl(meth)acrylamid, N-Isobutyl(meth)acrylamid, N-Decyl(meth)acrylamid, N-Cyclohexyl(meth)acrylamid, N-[3-(Dimethylamino)-2,2-dimethylpropyl]-methacrylamid, N-Dodecyl(meth)acrylamid, N-[3-Dimethylaminopropy](meth)acrylamid, N-[2-Hydroxy-ethyl](meth)acrylamid, besonders bevorzugt (Meth)acrylamid, verwendet werden.

Weiterhin seien die folgenden aminsubsitutierten Alkylester der (Meth)acrylsäure genannt: 2-Dimethylaminoethyl(meth)acrylat, 2-Diethylaminoethyl(meth)acrylat, 3-Dimethylamino-2,2-dimethylpropyl-1-(meth)acrylat, 3-Diethylamino-2,2-dimethylpropyl-1-(meth)acrylat, 2-Morpholinoethyl(meth)-acrylat, 2-tert.-Butylaminoethyl(meth)acrylat, 3-(Dimethyl-amino)propyl(meth)acrylat, 2-(Dimethylaminoethoxyethyl)(meth)acrylat.

Die Monomerkomponente K_{B} wird in Mengen von 0,2-20 Gew.% eingesetzt. Bevorzugt werden Mengen von 0,5-10,0 Gew.% eingesetzt. Besonders bevorzugt sind Mengen von 1,0-5,0 Gew.%.

Unter den Monomeren der Gruppe K_{C} versteht man mit den anderen Monomeren copolymerisierbare Verbindungen. Es können unter anderem 1-Alkene, wie z.B. 1-Hexen, 1-Hepten, verzweigte Alkene, wie z.B. Vinylcyclohexan, 3,3-Dimethylpropen, 3-Methyl-1-diisobutylen, 4-Methyl-1-penten, Vinylester, wie z.B. Vinylacetat, Styrol und/oder Derivate des Styrols, wie z.B. α-Methylstyrol, α-Ethylstyrol, Vinyltoluol, p-Methylstyrol, eingesetzt werden.
Die Monomerkomponente K_{c} wird in Mengen von 0-50 Gew.% eingesetzt. Bevorzugt werden Mengen von 0-20,0 Gew.% eingesetzt. Besonders bevorzugt sind Mengen von 0-5 Gew.%.

Die Monomerkomponente S_{A} umfaßt die gleichen Monomere wie K_{A}. Sie wird in Mengen von 100-65 Gew.% eingesetzt. Bevorzugt werden Mengen von 100-75,0 Gew.% eingesetzt. Besonders bevorzugt sind Mengen von 100-90 Gew.%.

Unter den Monomeren der Gruppe S_{B} versteht man als einfach oder N-substituierte Amide der Acrylsäure und/oder der Methacrylsäure oder eines aminsubstituierten Alkylesters der Acrylsäure und/oder der Methacrylsäure (b) können beispielsweise N-Methyl(meth)acrylamid, N-Dimethylaminoethyl-(meth)acrylamid,
N-Dimethylaminopropyl(meth)acrylamid, N-Isopropyl(meth)acrylamid,
N-tert.Butyl(meth)acrylamid, N-Isobutyl(meth)acrylamid,
N-Decyf(meth)acrylamid, N-Cyclohexyl(meth)acrylamid,
N-[3-(Dimethylamino)-2,2-dimethylpropyl]-methacrylamid,
N-Dodecyl(meth)acrylamid, N-[3-Dimethylaminopropy](meth)acrylamid,
N-[2-Hydroxy-ethyl](meth)acrylamid, besonders bevorzugt (Meth)acrylamid, verwendet werden.

Weiterhin seien die folgenden aminsubsitutierten Alkylester der (Meth)acrylsäure genannt: 2-Dimethylaminoethyl(meth)acrylat, 2-Diethylaminoethyl(meth)acrylat, 3-Dimethylamino-2,2-dimethylpropyl-1-(meth)acrylat, 3-Diethylamino-2,2-dimethylpropyl-1-(meth)acrylat, 2-Morpholinoethyl(meth)-acrylat, 2-tert.-Butylaminoethyl(meth)acrylat, 3-(Dimethyl-amino)propyl(meth)acrylat, 2-(Dimethylaminoethoxyethyl)(meth)acrylat.
Die Monomerkomponente S_{B} wird in Mengen von 0-20 Gew.% eingesetzt. Bevorzugt werden Mengen von 0-10 Gew.% eingesetzt. Besonders bevorzugt sind Mengen von 0-5 Gew.%.

Unter den Monomeren der Gruppe S_{C} versteht man mit den anderen Monomeren copolymerisierbare Verbindungen. Es können unter anderem 1-Alkene, wie z.B. 1-Hexen, 1-Hepten, verzweigte Alkene, wie z.B. Vinylcyclohexan, 3,3-Dimethylpropen, 3-Methyl-1-diisobutylen, 4-Methyl-1-penten, Vinylester, wie z.B. Vinylacetat, Styrol und/oder Derivate des Styrols, wie z.B. α-Methylstyrol, α-Ethylstyrol, Vinyltoluol, p-Methylstyrol, eingesetzt werden.
Die Monomerkomponente S_{C} wird in Mengen von 0-50 Gew.% eingesetzt. Bevorzugt werden Mengen von 0-20,0 Gew.% eingesetzt. Besonders bevorzugt sind Mengen von 0-5 Gew.%.

Das Additiv kann darüber hinaus aus einem Kern und mehreren Schalen aufgebaut sein. Im Fall von zwei Schalen wird die mittlere Schale als Z bezeichnet. Die Gewichtsanteile von Kern, Zwischenschale und Schale am Gesamtpolymerisat sind in diesem Falle jeweils mindestens 10 Gew.%.

Bevorzugt ist ein Anteil von jeweils mindestens 20 Gew.%. Besonders bevorzugt sind Anteile von jeweils mindestens 25 Gew.%.

Die Monomerzusammensetzung bei einer einzigen Zwischenschale liegt in folgenden Grenzen:
Z_{A}: 50-100 Gew.%, Bedeutung der Monomeren wie K_{A}
Z_{B}: 0-20 Gew.%, Bedeutung wie K_{B}
Z_{C}: 0-20 Gew.%, Bedeutung wie S_{B}
Z_{D}: 0-50 Gew.% jeweils bezogen auf die Zusammensetzung der jeweiligen Zwischenschale, an mit Z_{A}, Z_{B}, und Zc copolymerisierbaren Monomeren.

Die Monomerkomponente Z_{A} wird in Mengen von 50-100 Gew.% eingesetzt. Bevorzugt werden Mengen eingesetzt, die zwischen den Mengen der Monomeren K_{A} und S_{A} liegen.

Die Monomerkomponente Z_{B} wird in Mengen von 0-20 Gew.% eingesetzt. Bevorzugt werden Mengen eingesetzt, die zwischen 0 Gew.% und den Mengen der Monomeren K_{B} liegen.

Die Monomerkomponente Z_{C} wird in Mengen von 0-20 Gew.% eingesetzt. Bevorzugt werden Mengen eingesetzt, die zwischen 0 Gew.% und den Mengen der Monomeren S_{B} liegen.

Unter den Monomeren der Gruppe Z_{D} versteht man mit den anderen Monomeren copolymerisierbare Verbindungen. Es können unter anderem 1-Alkene, wie z.B. 1-Hexen, 1-Hepten, verzweigte Alkene, wie z.B. Vinylcyclohexan, 3,3-Dimethylpropen, 3-Methyl-1-diisobutylen, 4-Methyl-1-penten, Vinylester, wie z.B. Vinylacetat, Styrol und/oder Derivate des Styrols, wie z.B. α-Methylstyrol, α-Ethylstyrol, Vinyltoluol, p-Methylstyrol, eingesetzt werden.
Die Monomerkomponente Z_{D} wird in Mengen von 0-50 Gew.% eingesetzt. Bevorzugt werden Mengen von 0-20,0 Gew.% eingesetzt. Besonders bevorzugt sind Mengen von 0-5 Gew.%.

Das Additiv kann auch mehrere Zwischenschalen aufweisen. Die Gewichtsanteile des Kerns, der Schale und jeder Zwischenschale beträgt in diesem Falle jeweils mindestens 8 Gew.% bezogen auf das Gesamtpolymerisat. Bevorzugt ist ein Anteil von jeweils mindestens 10 Gew.%. Besonders bevorzugt sind Anteile von jeweils mindestens 15 Gew.%.

Die Monomerzusammensetzungen der Zwischenschalen bewegen sich jeweils in den bei Z beschriebenen Grenzen.

Das Additiv kann auch als Gradientenpolymerisat aufgebaut sein. In diesem Falle besteht zwischen dem Kern und der Schale in den jeweils genannten Zusammensetzungen ein Bereich, in dem sich die Monomerzusammensetzung kontinuierlich von der Kernzusammensetzung zur Schalenzusammensetzung ändert.
Der Bereich der kontinuierlichen Zusammensetzungsänderung kann sich im Extremfall vom Zentrum des Partikels bis ganz nach außen erstrecken. In diesem Falle geben die Zusammensetzungen von Kern und Schale nur die jeweiligen Ausgangs und Endzusammensetzungen an.
Kern und Schale können jedoch auch in bestimmten Gewichtsanteilen in reiner Form vorliegen und nur durch eine Zone der kontinuierlichen Änderung der Gewichtsanteile von einander getrennt sein.

### Herstellung der Vorgelierhilfsmittel

Die Herstellung der Bindemittel kann in an sich bekannter Weise erfolgen, bevorzugt durch Emulsionspolymerisation, die gegebenenfalls mehrstufig ausgeführt werden kann.
Bei Anwendung der Emulsionspolymerisation kann vorteilhaft nach dem Emulsions- oder Monomerzulaufverfahren gearbeitet werden, wobei ein Teil des Wassers sowie die Gesamtmenge oder Anteile des Initiators und des Emulgators vorgelegt werden. Die Teilchengröße lässt sich bei diesen Verfahren mit Vorteil durch die Menge des vorgelegten Emulgators steuern. Als Emulgatoren sind vor allem anionische und nichtionische Tenside verwendbar. Im allgemeinen wird die verwendete Emulgatormenge - bezogen auf das Polymerisat - 2,5 Gew.-% nicht überschreiten.
Als Initiator können neben den in der Emulsionspolymerisation üblichen Verbindungen, wie z. B. Perverbindungen wie Wasserstoffperoxid, Ammoniumperoxidisulfat (APS) auch Redoxsysteme wie Natriumdisulfit-APS-Eisen sowie wasserlösliche Azo-Starter verwendet werden. Die Initiatormenge liegt im allgemeinen bei 0,005 bis 0,5 Gew.-%, bezogen auf das Polymerisat.

Die Polymerisationstemperatur richtet sich innerhalb gewisser Grenzen nach den Initiatoren. So arbeitet man bei Anwendung von APS vorteilhaft im Bereich von 60 - 90 °C. Bei Einsatz von Redoxsystemen kann auch bei tieferen Temperaturen, beispielsweise bei 30 °C polymerisiert werden. Neben Zulaufpolymerisation kann auch nach dem Verfahren der Batch-Polymerisation gearbeitet werden. Dabei wird die Gesamtmenge bzw. ein Anteil der Monomeren mit allen Hilfsstoffen vorgelegt und die Polymerisation gestartet. Das Monomer-Wasser-Verhältnis muss dabei der freiwerdenden Reaktionswärme angepasst werden. In der Regel treten keine Schwierigkeiten auf, wenn man eine 50 %-ige Emulsion so erzeugt, dass man zunächst die Hälfte der Monomeren und der Hilfsstoffe in der Gesamtmenge des Wassers emulgiert und dann bei Raumtemperatur die Polymerisation auslöst und nach erfolgter Reaktion den Ansatz abkühlt und die verbleibende Hälfte der Monomeren zusammen mit den Hilfsstoffen zusetzt.

Die aus diesem Verfahren erhaltenen Primärpartikel haben typischerweise eine durchschnittliche Partikelgröße von 200 bis 1000 nm, die z.B. durch Laserbeugung bestimmt werden kann.

Die Gewinnung der Bindemittel in fester Form kann in herkömmlicher Weise durch Gefriertrocknung, Ausfällen oder vorzugsweise Sprühtrocknung vorgenommen werden.

Die Sprühtrocknung der Dispersionen kann in bekannter Weise erfolgen. Großtechnisch werden sogenannte Sprühtürme verwendet, die üblicherweise im Gleichstrom mit der eingesprühten Dispersion von oben nach unten mit Heißluft durchströmt werden. Die Dispersion wird durch eine oder viele Düsen versprüht oder mittels einer schnell rotierenden Lochscheibe zerstäubt. Die eintretende Heißluft hat eine Temperatur von 100 bis 250, vorzugsweise von 150 - 250°C. Für die Eigenschaften des sprühgetrockneten Emulsionspolymerisats ist die Austrittstemperatur der Luft entscheidend, d.h. die Temperatur, bei der die getrockneten Pulverkörnchen am Fuß des Sprühturms oder in einem Zyklonabschneider von dem Luftstrom getrennt werden. Diese Temperatur soll möglichst unter der Temperatur liegen, bei der das Emulsionspolymerisat sintern oder schmelzen würde. In vielen Fällen ist eine Austrittstemperatur von 50 - 90 °C gut geeignet.
Die Austrittstemperatur lässt sich bei konstantem Luftstrom durch Variation der kontinuierlich je Zeiteinheit eingesprühten Dispersionsmenge regeln.

Dabei kommt es meist zur Bildung von Sekundärteilchen, die aus agglomerierten Primärpartikel bestehen. Unter Umständen kann es vorteilhaft sein, dass die einzelnen Latexteilchen beim Trocknen miteinander zu größeren Einheiten verkleben (partielle Verglasung). Als Richtwert für die durchschnittlichen Korngrößen der agglomerierten Einheiten (gemessen beispielsweise mit der Methode der Laserbeugung) kann man 5 - 250 µm annehmen.

Weiter können die erfindungsgemäßen Bindemittel auch als Kern-Schale-Polymerisate in Anlehnung an die DE-C 27 22 752 bzw. die US-A 4 199 486 hergestellt werden. Es können auch mehrere Schalen um den Kern aufgebaut werden.

Grundsätzlich eignet sich eine Vielzahl von Monomeren zur Herstellung der Kern-Schale-Polymerisate.

Der Aufbau der Copolymerisate aus einem Kernmaterial und einem Schalenmaterial wird in an sich bekannter Weise durch eine bestimmte Verfahrensweise bei der Emulsionspolymerisation erhalten. Dabei werden die das Kernmaterial bildenden Monomeren in wässriger Emulsion in der ersten Verfahrensstufe polymerisiert. Wenn die Monomeren der ersten Stufe im wesentlichen auspolymerisiert sind, werden die Monomerbestandteile des Schalenmaterials unter solchen Bedingungen zu dem Emulsionspolymerisat zugegeben, dass die Bildung neuer Teilchen vermieden wird. Dadurch wird das in der zweiten Stufe entstehende Polymerisat schalenförmig um das Kernmaterial herum gelagert.

Die erfindungsgemäß einzusetzenden Polymerisate können auch nach dem Verfahren der Suspensionspolymerisation hergestellt werden.
Die Primärteilchengröße liegt in diesem Fall üblicherweise im Bereich von 10 bis 100 µm.

### Beispiele

Als Epoxidharze wurde das Harz DER 330 von Dow Chemicals verwendet.

### Allgemeine Vorschrift zu Herstellung und Mengen der Beispiele:

Die Pasten aus Epoxidharz DER 330 und den Additiven A - F in den angegebenen Masseverhältnissen wurden in einem Rühraggregat (Dispermat) 5 Minuten bei mittlerer Drehzahl (ca. 2.000 U/min.) homogenisiert und anschließend im Vakuum (Planimax) entlüftet.

Die Messungen der Viskositäten erfolgte mit einem Gerät der Firma Thermo-Haake, Modell Haake Rheostress 600.
Die Aufheizraten betrugen 10° C/Minute, die Abkühlraten betrugen ebenfalls 10°C/Minute.

### Beispiel 1

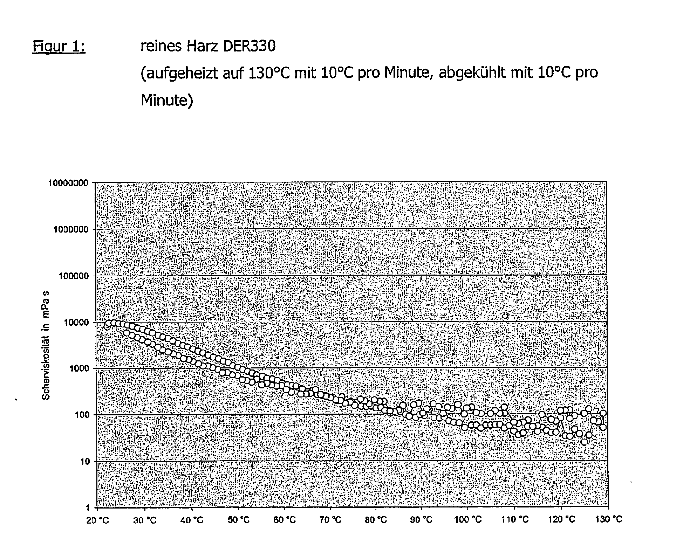

Härtung des reinen Harzes DER 330 (Hersteller: Dow Chemicals) ohne Härter und Beschleuniger als Vergleich. Das Harz wird bei höherer Temperatur flüssiger und erreicht beim Abkühlen wieder seine Ursprungsviskosität (Figur 1).

### Beispiel 2

Zusammensetzung der Mischung:
10 Gew.-% Additiv A
90 Gew.-% DER 330

### Herstellungsverfahren des Additives A:

In einem mittels Wasserbad temperierbaren 5-Liter-Reaktor mit Rührer, Rückflusskühler, Thermometer und Dosierpumpe werden unter Stickstoffatmosphäre 1400 g deionisiertes Wasser und 1,2 g Emulgator (Disponil SUS IC 875) vorgelegt. Unter Rühren wird auf 80°C vorgeheizt. In einem separaten Behältnis wird eine Monomeremulsion M_{A1}, bestehend aus 700 g Methylmethacrylat, 550 g n-Butylmethacrylat, 25 g N-Vinylimidazol und 1,3 g n-Dodecylmercaptan, sowie 9,0 g Disponil SUS IC 875 und 550 ml deionisiertem Wasser angesetzt.
120 mL dieser Emulsion werden in den Reaktor dosiert. Zur Initiierung werden 20,0 ml einer 5 %-igen wässrigen Lösung Natriumperoxodisulfat und 15,0 ml einer 5 %-igen wässrigen Lösung Natriumhydrogensulfit zugesetzt.
Infolge der beginnenden Polymerisation steigt die Temperatur im Reaktor um einige °C an. Wenn keine weitere Temperaturerhöhung mehr zu beobachten ist wird im Verlaufe einer Stunde die restliche Monomerdispersion MA1 in den Reaktor dosiert. Ein Anstieg der Reaktionstemperatur über 85°C wird mittels Wasserbadkühlung vermieden.
Nach beendeter Zudosierung wird 30 min gerührt und anschließend werden weitere 10,0 ml einer 5 %-igen wässrigen Lösung Natriumperoxodisulfat und 5,0 ml einer 5 %-igen wässrigen Lösung Natriumhydrogensulfit zugegeben.
Es wird eine zweite Monomeremulsion M_{A2} bestehend aus 1200 g Methylmethacrylat, 16,0 g Disponil SUS IC 875 und 550 ml deionisiertem
Wasser innerhalb einer Stunde zudosiert. Ein Anstieg der Reaktionstemperatur über 85°C wird mittels Wasserbadkühlung vermieden.
Nach Zugabe der Emulsion wird die Temperatur während einer
Nachreaktionszeit von 30 min zwischen 80°C und 85°C gehalten, bevor die entstandene Dispersion auf Raumtemperatur abgekühlt wird.
Die erhaltene Polymerdispersion wird in-einem Trockenturm mit Zentrifugalzerstäuber in ein Pulver überführt. Die Turmaustrittstemperatur beträgt dabei 80°C; die Umdrehungsgeschwindigkeit der Zerstäuberscheibe beträgt 20000 min-1.

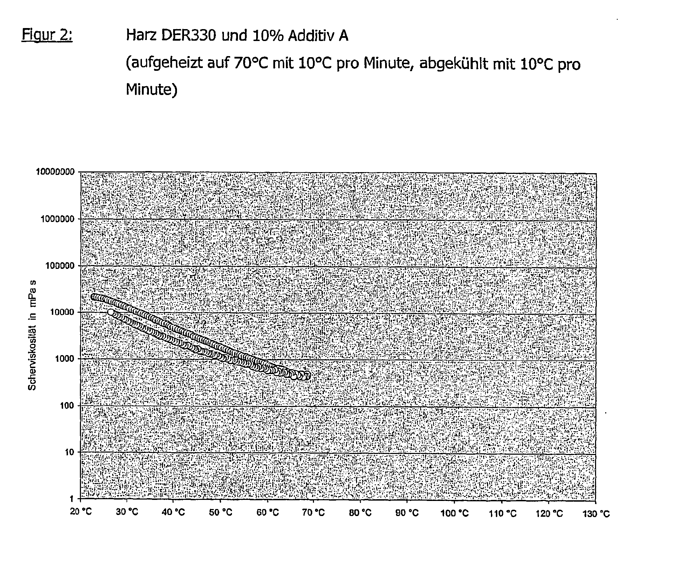

Wird die Mischung auf nur auf 70° C aufgeheizt, ist die Änderung der Viskosität wie beim unmodifizierten Harz reversibel. (Figur 2)

### Beispiel 3

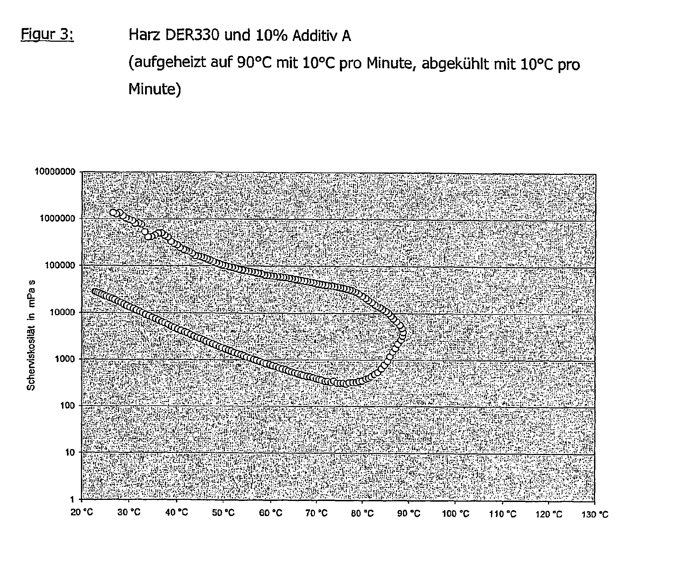

Erhitzt man die Mischung auf 90° C (Figur 3), so steigt die Viskostität stark an; nach dem Abkühlen hat die Mischung eine Viskosität von mehr als 10⁶ mPa·s, gegenüber etwa 3.10⁴ mPa·s vor der Aktivierung des Additives.
Unter 70°C kann die Mischung ohne Einschränkungen verarbeitet werden, da - wie in Beispiel 2 gezeigt - keine Aktivierung des Additivs stattfindet. Bereits 20°C mehr sind ausreichend um den gewünschten Vorgelierungseffekt zu erzielen.

### Beispiel 4

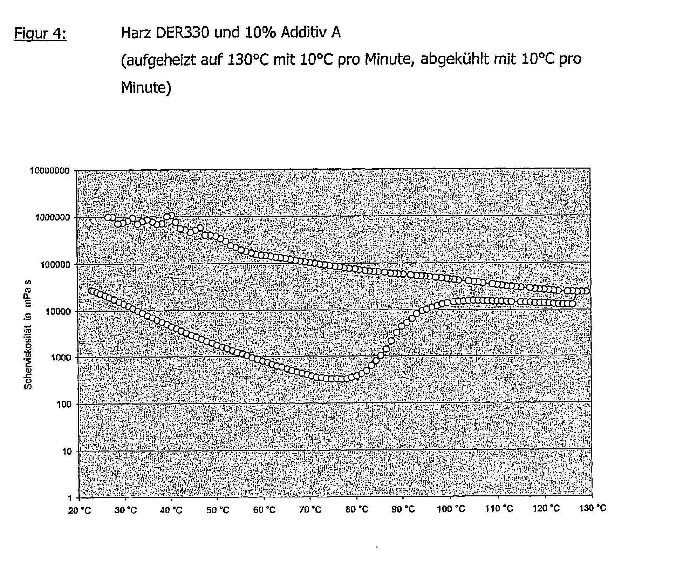

Eine Erwärmung der Mischung auf höhere Temperaturen (wie 130°C in Figur 4) beschleunigt die Aktivierung des Additivs. Es wird jedoch nach dem Abkühlen die gleiche Endviskosität erreicht.
Am Beispiel des Additives A ist zu sehen dass es einen sehr scharfe Aktivierungstemperatur gibt. Bleibt man unterhalb dieser Aktivierungstemperatur ist kein Effekt zu beobachten; erhöht man die Temperatur nur wenig über diese Aktivierungstemperatur tritt die volle Wirkung ein.

### Beispiel 5

### Additiv B:

Zusammensetzung der Mischung:
90 Gew.-% DER 330
10 Gew.-% Additiv B

### Herstellungsverfahren des Additives B:

Die Herstellung des Additivs B erfolgt analog zu der der in Beispiel 1 beschriebenen Herstellung des Additivs A.
Abweichend besteht die die erste Monomeremulsion M_{B1} aus 840 g Methylmethacrylat, 650 g n-Butylmethacrylat, 30 g N-Vinylimidazol und 1,5 g n-Dodecylmercaptan, sowie 11,0 g Disponil SUS IC 875 und 650 ml deionisiertem Wasser.

Die zweite Monomeremulsion M_{B2} besteht aus 1000 g Methylmethacrylat, 13,0 g Disponil SUS IC 875 und 400 ml deionisiertem Wasser.

Additiv B unterscheidet sich von Additiv A durch eine dünnere Schale um den Kern des Kern-Schale-Polymerisats.

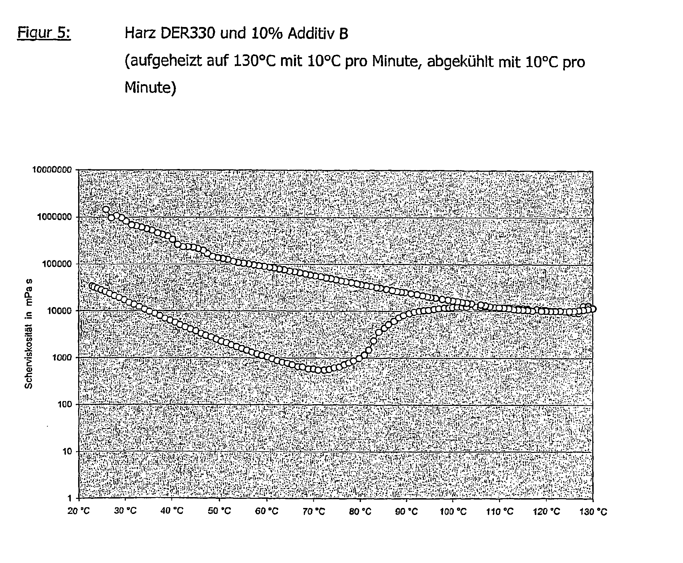

Figur 5 zeigt, dass die Vorgelier- oder Aktivierungstemperatur im Vergleich zur Temperatur aus Figur 4 gesenkt wird.

### Beispiel 6:

### Additiv C:

Zusammensetzung der Mischung:
90 Gew.-% DER 330
10 Gew.-% Additiv C

### Herstellungsverfahren des Additives C:

Die Herstellung des Additivs C erfolgt analog zu der der in Beispiel 1 beschriebenen Herstellung des Additivs A.
Die erste Monomeremulsion M_{C1} ist unverändert gegenüber der Monomeremulsion M_{A1} in Beispiel 1.
Abweichend besteht die die zweite Monomeremulsion M_{C2} aus 1100 g Methylmethacrylat, 100 g n-Butylmethacrylat, 13,0 g Disponil SUS IC 875 und 550 ml deionisiertem Wasser.
Die erste Monomeremulsion M_{C1} ist unverändert gegenüber Beispiel 1.

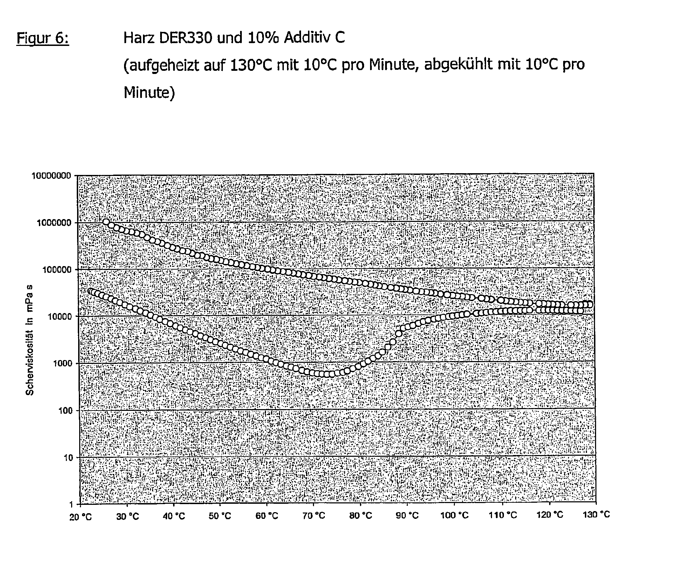

Im Vergleich zu Additiv A hat Additiv C eine weichere Schale (Figur 6). Nach der dem Fachmann bekannten Fox-Gleichung kann die Glastemperatur der Schale von Additiv A mit 105° C abgeschätzt werden. Die Glastemperatur der Schale von Additiv C beträgt nach der gleichen Methode 96° C.

### Beispiel 7 :

### Additiv D:

Zusammensetzung der Mischung:
90 Gew.-% DER 330
10 Gew.-% Additiv D

### Herstellungsverfahren des Additives D:

Die Herstellung des Additivs D erfolgt analog zu der der in Beispiel 1 beschriebenen Herstellung des Additivs A.
Abweichend besteht die die erste Monomeremulsion M_{D1} aus 700 g Methylmethacrylat, 550 g n-Butylmethacrylat und 25 g N-Vinylimidazol, sowie 9,0 g Disponil SUS IC 875 und 550 ml deionisiertem Wasser.
Die zweite Monomeremulsion M_{D2} ist unverändert gegenüber der Monomeremulsion M_{A2} in Beispiel 1.

Als Maßzahl für das mittlere Molekulargewicht wurde die reduzierte Viskosität bestimmt (gemäß DIN EN ISO 1628-1 und bei einer Einwaage von 0,125 g pro 100 mL Chloroform).
Für die Additive A, D und E ergeben sich folgende Viskositätszahlen :
Additiv A : 327 ml/g
Additiv D : 514 ml/g
Additiv E : 165 ml/g
(Eine grobe Abschätzung des Molekulargewichtes ist nach der Mark-Houwink-Beziehung unter Zuhilfenahme der Mark-Houwink-Konstanten a=0,83 und k=0,0034 mL/g (für Poly(methylmethacrylat)-Homopolymere bei 25°C in Chloroform, entnommen dem "Polymer Handbook: Fourth Edition", J. Brandrup, E.H. Immergut, E.A. Grulke) möglich.
Dementsprechend erhält man mittlere Molekulargewichte für Additiv A von etwa 1.000.000 g/mol, für Additiv D von etwa 1.700.000 g/mol und für Additiv E von etwa 440.000 g/mol.).

Die Monomeren-Zusammensetzung von Additiv D ist die gleiche wie die Monomeren-Zusammensetzung von Additiv A, das Molekulargewicht von Additiv D ist aber höher als das von Additiv A.

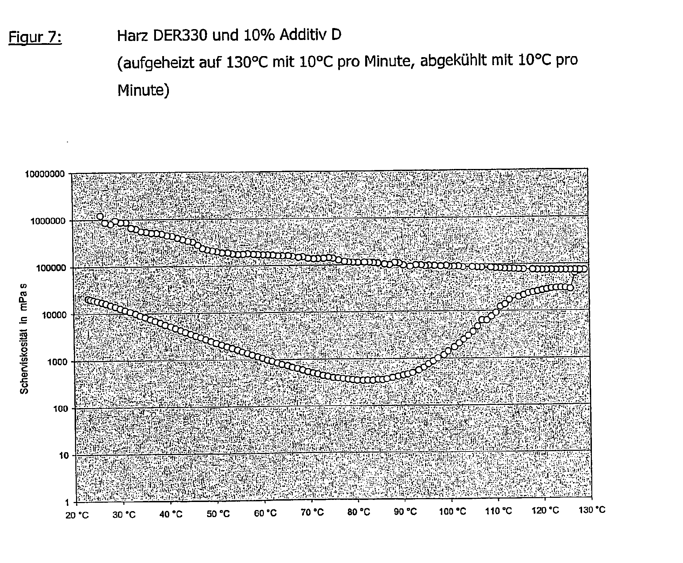

Figur 7 zeigt den Effekt von Additiv D. Das höhere Molekulargewicht hat eine langsamere Aktivierung zur Folge. Dieser Effekt ist vermutlich auf eine langsamere Quellung des Additivs im Harz zurückzuführen. Daraus resultiert eine Erhöhung der Vorgeliertemperatur gegenüber Additiv A.

### Beispiel 8:

### Additiv E:

Zusammensetzung der Mischung:
90 Gew.-% DER 330
10 Gew.-% Additiv E

### Herstellungsverfahren des Additives E:

Die Herstellung des Additivs E erfolgt analog zu der der in Beispiel 1 beschriebenen Herstellung des Additivs A.
Abweichend besteht die die erste Monomeremulsion M_{E1} aus 700 g Methylmethacrylat, 550 g n-Butylmethacrylat, 25 g N-Vinylimidazol und 15,0 g n-Dodecylmercaptan, sowie 9,0 g Disponil SUS IC 875 und 550 ml deionisiertem Wasser.
Die zweite Monomeremulsion M_{E2} ist unverändert gegenüber der Monomeremulsion M_{A2} in Beispiel 1.

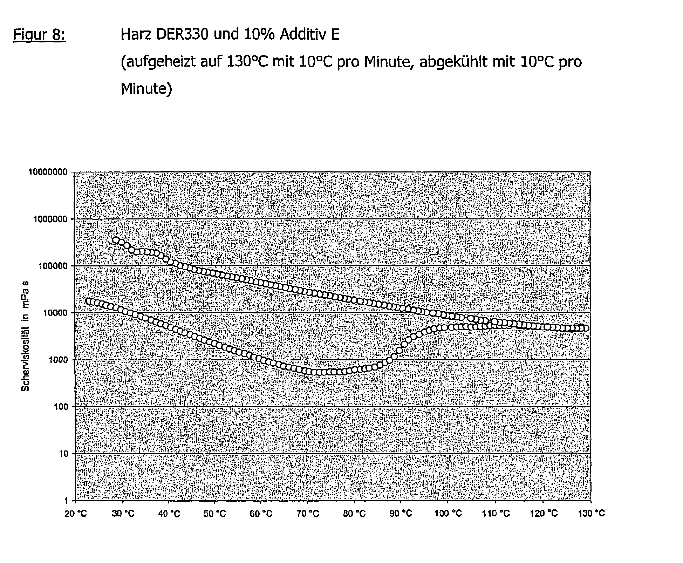

Figur 8 zeigt den Effekt von Additiv E.
Additiv E weist ein niedriges Molekulargewicht als Additiv D auf, die Monomerzusammensetzung ist gleich.
Die Wirkung des Additives E beginnt bei niedrigerer Temperatur als bei
Additiv D. Die erreichte Endviskosität liegt bei dem hochmolekulareren Additiv D deutlich höher als bei dem niedrigerermolekularen Additivs E.

### Beispiel 9:

### Additiv F:

Zusammensetzung der Mischung:
90 Gew.-% DER 330
10 Gew.-% Additiv F

### Herstellungsverfahren des Additives F:

Die Herstellung des Additivs F erfolgt analog zu der der in Beispiel 1 beschriebenen Herstellung des Additivs A.
Abweichend besteht die die erste Monomeremulsion M_{F1} aus 1200 g Butylacrylat, 25 g N-Vinylimidazol, 16,0 g Disponil SUS IC 875 und 550 ml deionisiertem Wasser.
Die zweite Monomeremulsion M_{B2} besteht aus 1100 g Methylmethacrylat, 40 g Methacylamid, 16,0 g Disponil SUS IC 875 und 550 ml deionisiertem Wasser.

Additiv F hat eine von den Additiven A bis E deutlich verschiedene Monomerzusammensetzung. Der Kern besteht zu 98 Gew.% aus Butylacrylat. Die Schale enthält 3,5 Gew.% Methacrylamid.

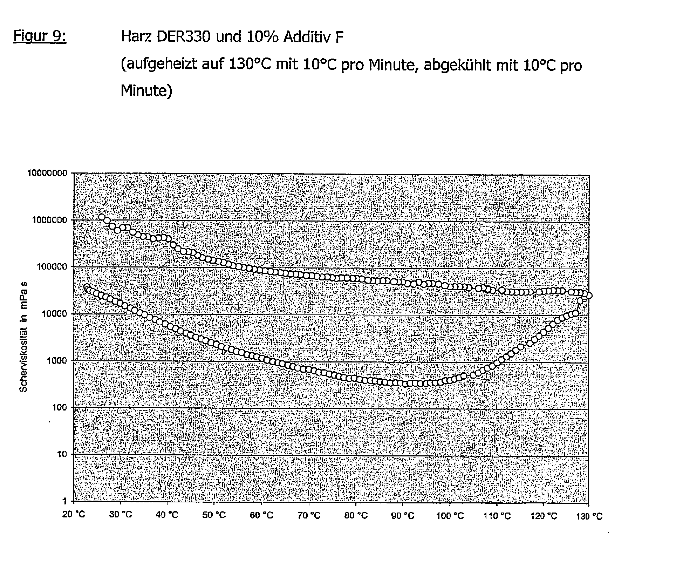

Figur 9 zeigt, dass das Additiv F zu einer relativ hohen Aktivierungstemperatur führt.

## Patentansprüche

1. Verwendung eines Additivs als Vorgelierhilfsmittel für Epoxidharze, zusammengesetzt aus einem Kern und einer optionalen Schale, wobei die Massenverhältnisse zwischen Kern und Schale zwischen 100 Gew.-% : 0 Gew.-% und 20 Gew.-% : 80 Gew.-% liegen können und wobei der Kern folgende Monomerzusammensetzung aufweist:
K_{A}: 99,8 Gew.-% - 49,8 Gew.-% an C₁-C₈-(Meth)acrylaten K_{B}: 0,2 Gew.-% - 20 Gew.-% eines radikalisch polymerisierbaren Monomeren mit basischem Stickstoffatom und
K_{C}: 0 Gew.-% - 50 Gew.-%, jeweils bezogen auf die Zusammensetzung des Kerns, an weiteren, mit K_{A} und K_{B} copolymerisierbaren Monomeren aufweist
und wobei die Schale folgende Monomerzusammensetzung aufweist:
S_{A}: 100 Gew.-% - 65 Gew.-%, Bedeutung der Monomeren wie unter K_{A} aufgeführt,
S_{B}: 0 Gew.-% - 20 Gew.-% eines einfachen oder N-substituierten Amides der Acrylsäure und/oder der Methacrylsäure, oder eines aminsubstituierten Alkylesters der Acrylsäure und/oder der Methacrylsäure und
S_{C}: 0 Gew.-% - 50 Gew.-%, jeweils bezogen auf die Zusammensetzung der Schale, an mit S_{A} und S_{B} copolymerisierbaren Monomeren.

2. Verwendung eines Additivs gemäß Anspruch 1, **dadurch gekennzeichnet, dass** das Massenverhältnis zwischen Kern und Schale zwischen 80 Gew.-% : 20 Gew.-% und 20 Gew.-% : 80 Gew.-% liegen kann.

3. Verwendung eines Additivs nach einem der Ansprüche 1 oder 2, **dadurch gekennzeichnet, dass** es sich bei dem Monomere K_{B} um Vinylimidazol handelt.

4. Verwendung eines Additivs nach einem der Ansprüche 1 bis 3, **dadurch gekennzeichnet, dass** es sich bei dem.Monomere S_{B} um Methacrylamid handelt.

5. Verwendung eines Additivs nach einem der Ansprüche 1 bis 4, **dadurch gekennzeichnet, dass** zwischen Kern und Schale eine oder mehrere Zwischenschalen liegen, die ggf. verschiedene Monomerzusammensetzungen in den folgenden Grenzen aufweisen:
Z_{A}: 50 Gew.-% - 100 Gew.-%, Bedeutung der Monomeren wie K_{A}
Z_{B}: 0 Gew.-% - 20 Gew.-%, Bedeutung wie K_{B}
Z_{C}: 0 Gew.-% - 20 Gew.-%, Bedeutung wie S_{B}
Z_{D}: 0 Gew.-% - 50 Gew.-% jeweils bezogen auf die Zusammensetzung der jeweiligen Zwischenschale, an mit Z_{A}, Z_{B}, und Z_{C} copolymerisierbaren Monomeren.

6. Verwendung eines Additivs nach einem der Ansprüche 1 bis 4, **dadurch gekennzeichnet, dass** sich die Monomerzusammensetzung des Polymerisats von der Kernzusammensetzung zur Schalenzusammensetzung gradientenartig verändert.

## Claims

1. Use of an additive as pre-gelling assistant for epoxy resins, composed of a core and an optional shell, it being possible for the mass ratios between core and shell to be between 100% by weight:0% by weight and 20% by weight:80% by weight, and the core having the following monomer composition:
K_{A}: 99.8% by weight -49.8% by weight of C₁-C₈ (meth) acrylates
K_{B}: 0.2% by weight -20% by weight of a free-radically polymerizable monomer having a basic nitrogen atom and
K_{C}: 0% by weight -50% by weight, based in each case on the composition of the core, of further monomers copolymerizable with K_{A} and K_{B}
and the shell having the following monomer composition:
S_{A}: 100% by weight -65% by weight, monomers definition as set out under K_{A},
S_{B}: 0% by weight -20% by weight of a simple or N-substituted amide of acrylic acid and/or methacrylic acid, or of an amine-substituted alkyl ester of acrylic acid and/or methacrylic acid and
S_{C}: 0% by weight -50% by weight, based in each case on the composition of the shell, of monomers copolymerizable with S_{A} and S_{B}.

2. Use of an additive according to Claim 1, **characterized in that** it is possible for the mass ratio between core and shell to be between 80% by weight:20% by weight and 20% by weight:80% by weight.

3. Use of an additive according to either of Claims 1 and 2, **characterized in that** the monomer K_{B} is vinylimidazole.

4. Use of an additive according to any one of Claims 1 to 3, **characterized in that** the monomer S_{B} is methacrylamide.

5. Use of an additive according to any one of Claims 1 to 4, **characterized in that** between core and shell there are one or more intershells having optionally different monomer compositions within the following limits:
Z_{A}: 50% by weight - 100% by weight, monomers definition as for K_{A}
Z_{B}: 0% by weight - 20% by weight, definition as for K_{B}
Z_{C}: 0% by weight - 20% by weight, definition as for S_{B}
Z_{D}: 0% by weight - 50% by weight, based in each case on the composition of the respective intershell, of monomers copolymerizable with Z_{A}, Z_{B} and Z_{C}.

6. Use of an additive according to any one of Claims 1 to 4, **characterized in that** there is a change in the monomer composition of the polymer from the core composition to the shell composition in the manner of a gradient.

## Revendications

1. Utilisation d'un additif comme adjuvant de prégélification pour des résines époxyde, composé d'un noyau et d'une coquille éventuelle, les rapports des masses entre le noyau et la coquille pouvant se situer entre 100% en poids:0% en poids et 20% en poids:80% en poids et le noyau présentant la composition de monomères suivantes :
K_{A} : 99,8% en poids-49,8% en poids de C₁-C₈-(méth)acrylates
K_{B} : 0,2% en poids-20% en poids d'un monomère polymérisable par voie radicalaire, présentant un atome d'azote basique et
K_{C} : 0% en poids-50% en poids, à chaque fois par rapport à la composition du noyau, d'autres monomères copolymérisables avec K_{A} et K_{B}
et la coquille présentant la composition de monomères suivante :
S_{A} : 100% en poids-65% en poids, signification des monomères telle qu'indiquée au point K_{A},
S_{B} : 0% en poids-20% en poids d'un amide simple ou N-substitué de l'acide acrylique et/ou de l'acide méthacrylique ou d'un ester alkylique substitué par amine de l'acide acrylique et/ou de l'acide méthacrylique et
S_{C} : 0% en poids-50% en poids, à chaque fois par rapport à la composition du noyau, de monomères copolymérisables avec S_{A} et S_{B}.

2. Utilisation d'un additif selon la revendication 1, **caractérisée en ce que** le rapport des masses entre le noyau et la coquille peut se situer entre 80% en poids:20% en poids et 20% en poids:80% en poids.

3. Utilisation d'un additif selon l'une quelconque des revendications 1 ou 2, **caractérisée en ce qu'**il s'agit, pour les monomères K_{B} de vinylimidazole.

4. Utilisation d'un additif selon l'une quelconque des revendications 1 à 3, **caractérisée en ce qu'**il s'agit, pour les monomères S_{B} de méthacrylamide.

5. Utilisation d'un additif selon l'une quelconque des revendications 1 à 4, **caractérisée en ce qu'**une ou plusieurs coquilles intermédiaires sont situées entre le noyau et la coquille et présentent le cas échéant des compositions de monomères différentes, dans les limites suivantes :
Z_{A} : 50% en poids-100% en poids, signification des monomères comme pour K_{A}
Z_{B} : 0% en poids-20% en poids, signification comme pour K_{B}
Z_{C} : 0% en poids-20% en poids, signification comme pour S_{B}
Z_{D} : 0% en poids-50% en poids, à chaque fois par rapport à la composition de chaque coquille intermédiaire, de monomères copolymérisables avec Z_{A}, Z_{B}, et Z_{C}.

6. Utilisation d'un additif selon l'une quelconque des revendications 1 à 4, **caractérisée en ce que** la composition de monomères du polymère change selon un gradient de la composition du noyau vers la composition de la coquille.
